# EUROPÄISCHE PATENTSCHRIFT

(11) **EP 4 208 657 B1**
(45) Veröffentlichungstag und Bekanntmachung des Hinweises auf die Patenterteilung: **07.08.2024**
(21) Anmeldenummer: 21759069.4
(22) Anmeldetag: 10.08.2021
(51) Int. Cl.: F16K 15/06, F16K 17/04, F16K 25/00, E03C 1/04, F16K 17/196, F16K 11/00

(54) **RÜCKSCHLAGVENTIL MIT INTEGRIERTEM ÜBERDRUCKVENTIL**
CHECK VALVE WITH INTEGRATED PRESSURE RELIEF VALVE
SOUPAPE ANTIRETOUR DOTÉE D'UNE SOUPAPE DE SURPRESSION INTÉGRÉE

(30) Priorität: 01.09.2020 DE 202020105036 U
(43) Veröffentlichungstag der Anmeldung: 12.07.2023
(73) Patentinhaber: Neoperl GmbH, 79379 Müllheim (DE)
(72) Erfinder: FANGMEIER, Martin, 79424 Auggen (DE)
(74) Vertreter: Mertzlufft-Paufler, Cornelius
(86) Internationale Anmeldenummer: PCT/EP2021/072297
(87) Internationale Veröffentlichungsnummer: WO 2022/048867

(56) Entgegenhaltungen:
- EP-A1- 2 821 736
- DE-A1- 102015 002 161
- DE-A1- 2 455 792
- US-A- 2 191 636
- US-A- 2 598 131
- US-A- 3 724 707

## Beschreibung

Die Erfindung betrifft ein Rückschlagventil mit einem Ventilkörper, der von dem in Durchströmrichtung anströmenden Wasser aus einer Schließstellung, in welcher Schließstellung der Ventilkörper an einem ersten Ventilsitz dicht anliegt, gegen eine Rückstellkraft in eine Offenstellung, in welcher der Ventilkörper vom ersten Ventilsitz abgehoben ist, bewegbar ist, und mit einem Überdruckventil, das einen Schließkörper hat, welcher durch den Druck des entgegen der Durchströmrichtung rückströmenden Wassers von einer Schließstellung, in welcher der Schließkörper an einem zweiten Ventilsitz dicht anliegt, gegen eine Rückstellkraft in eine Offenposition, in welcher Offenposition der Schließkörper vom zweiten Ventilsitz abgehoben ist, bewegbar ist, wobei die auf den Schließkörper des Überdruckventils einwirkende Rückstellkraft im Vergleich zu der auf den Ventilkörper einwirkenden Rückstellkraft größer ist.

Bei sanitären Armaturen, insbesondere solchen, die einen Temperaturthermostaten und ein davon getrennt angeordnetes Mengenregulier- und Absperrventil aufweisen, werden in Zulaufleitungen der Kalt- und Warmwasserzuläufe regelmäßig Rückflussverhinderer eingesetzt, die bei geschlossener Wasserentnahme ein Überströmen zwischen Kalt- und Warmwasseranschlüssen verhindern sollen. Hierbei ergibt sich das Problem, dass sich bei geschlossenen Rückflussverhinderern und gleichzeitig geschlossener Wasserentnahme innerhalb der Armatur ein durch Rückflussverhinderer und das geschlossene Mengenregulierventil abgeschlossenes Wasservolumen ergibt, aufgrund dessen sich bei einer Erwärmung und Ausdehnung, beispielsweise wenn bei bereits warmer Armatur kurz der Kaltwasserzulauf geöffnet wird, wegen der Inkompressibilität des Wassers erhebliche Drücke einstellen.

Um derartige Probleme zu vermeiden, hat man ein für sanitäre Wasserarmaturen bestimmtes Rückschlagventil geschaffen, das einen Ventilkörper hat, der von dem in üblicher Durchströmrichtung anströmenden Wasser aus einer Schließstellung, in welcher Schließstellung der Ventilkörper an einem Ventilsitz dicht anliegt, gegen eine Rückstellkraft in eine Offenstellung bewegbar ist, in welcher der Ventilkörper vom Ventilsitz abgehoben ist (vgl. EP 0 653 033 B1). Im Ventilkörper des vorbekannten Rückschlagventils ist ein Überdruckventil integriert. Dazu setzt sich der Ventilkörper des Rückschlagventils aus einem Kegel, der einen rohrförmigen Fortsatz mit einer seitlichen Eintrittsöffnung aufweist, und einer Kegelkappe, die einen haubenförmigen Aufsatz mit einer seitlichen Austrittsöffnung besitzt, zusammen. Zwischen dem Kopf des haubenförmigen Aufsatzes und dem oberen Ende des rohrförmigen Fortsatzes, der als Ventilsitz des Überdruckventiles dient, ist der Schließkörper des Überdruckventils im Dichtsitz vorgespannt. Der Schließkörper des Überdruckventils ist dabei als elastisches Formteil ausgebildet. Ist nun das vorbekannte Rückschlagventil zum Beispiel in der Kaltwasserzuleitung einer Einhebelmischbatterie eingebaut, bei der die Kaltwasserseite abgesperrt, jedoch die Warmwasserseite geöffnet ist, und ist das Kaltwasserrückschlagventil geschlossen, so kann es durch Erhitzen des Wassers zwischen dem geschlossenen Kaltwasserventil der Armatur und dem geschlossenen Kaltwasserrückschlagventil zu einem hohen Druck kommen, der durch die Öffnung im rohrförmigen Fortsatz auf das integrierte Überdruckventil wirkt, so dass der Schließkörper von dem Ventilsitz des Überdruckventils abgehoben wird und das Wasser durch die seitliche Austrittsöffnung des haubenförmigen Aufsatzes entweichen kann.

Auch hat man bereits ein Rückschlagventil der eingangs erwähnten Art geschaffen, bei dem das Überdruckventil einen im Ventilkörper des Rückschlagventils verschieblich geführten Schließkörper hat, der bei überhöhtem Überdruck auf der Abströmseite des Rückschlagventils entgegen der üblichen Durchströmrichtung von einer Schließstellung gegen die Kraft einer starken Rückstellfeder in eine Offenstellung bewegbar ist und eine Druckentlastung in der Zuleitung ermöglicht. Dabei ist der Schließkörper des in das vorbekannte Rückschlagventil integrierten Überdruckventiles aus einer metallenen Kugel gebildet, die von der Rückstellfeder gegen den aus thermoplastischem Kunststoff hergestellten Ventilsitz des Überdruckventils gedrückt wird (vgl. https://de.www.additively.com/de/showcase/de/optimierteskugelrueckschlagventil-fuer-fluessigkeitsfuellsystem-np). Da die zur Herstellung des vorbekannten Rückschlagventils verwendeten Spritzgusswerkzeuge einem Verschleiß im Fertigungsprozess unterliegen, kann die Dichtheit des vorbekannten Rückschlagventils im Bereich seines Überdruckventils zunehmend nachlassen oder auch die Funktionssicherheit des Überdruckventils beeinträchtigt sein. Aus der US 2 598 131 A ist eine kombinierte Ventil- und Siebeinheit nach dem Oberbegriff des Anspruchs 1 vorbekannt, welche beispielsweise in Pumpen benutzt wird, und die Aufgabe hat, einen Rückfluss von Flüssigkeit zu verhindern und eine Durchsiebung der Flüssigkeit zu ermöglichen, bevor die Flüssigkeit in die Pumpe eintritt.

Aus der US 2 191 636 A ist eine weitere Ventilanordnung bekannt, welche in Kühlsystemen eingesetzt wird.

Die US 3 724 707 A beschreibt eine Überdruck-Vakuum-Entlastungs-Kraftstoffeinfülldeckelanordnung, die eine Abdeckung aufweist, eine an der Abdeckung befestigte Verschlusskappe und eine an der Verschlusskappe befestigte Ventilanordnung umfasst.

Aus der DE 24 55 792 A1 ist ein Ventilgehäuse vorbekannt, in dem sich zwei Ventilkegel befinden, deren Arbeitshub bezogen auf die Gehäuse-Durchflussrichtung gegeneinander um 180° versetzt sind, und dadurch den Unterdruck oder Überdruck in einem geschlossenen Behälter, Gefäß, Tank oder dergleichen ausgleichen kann.

Aus der EP 2 821 736 A1 ist ein Expansionsventil eines Dampfkompressionssystems vorbekannt, beispielsweise ein Kältesystem, ein Klimatisierungssystem oder eine Wärmepumpe.

Das Expansionsventil ist hierbei geeignet, den Strömungsquerschnitt der Auslassöffnung in zwei unterschiedlichen Differenzdruckbereichen über das Expansionsventil genau zu steuern.

Aus der DE 10 2015 002161 A1 ist ein Schließventil mit einem Ventilkörper der bei Überschreiten eines festgelegten Fluiddrucks von einer Schließstellung gegen die Rückstellkraft eines Rückstellelements in eine Offenstellung bewegbar ist, wobei der Ventilkörper in der Schließstellung an einem, eine Ventilöffnung umgrenzenden Ventilsitz dicht anliegt und den Durchfluss durch den ihm zugeordneten Leitungsabschnitt versperrt.

Es besteht daher die Aufgabe, ein Rückschlagventil der eingangs erwähnten Art zu schaffen, das gegen fertigungsbedingte Toleranzen seiner Bauteile unempfindlich ist und sich stets durch eine hohe Dichtheit und Funktionssicherheit hinsichtlich des Toleranzbereichs des Öffnungsdruckes über die gesamte Lebensdauer auszeichnet.

Die erfindungsgemäße Lösung dieser Aufgabe besteht bei dem Rückschlagventil der eingangs erwähnten Art insbesondere darin, dass der Schließkörper des Überdruckventils einen Schließkörperkern aus einem ersten Material aufweist, welcher Schließkörperkern in seinem in Schließstellung am zweiten Ventilsitz dicht anliegenden Teilbereich eine Haut oder eine Schicht aus einem zweiten, demgegenüber weicheren und/oder elastischeren Material trägt und dass der Schließkörper des Überdruckventils als Zwei- oder Mehrkomponenten-Kunststoffspritzgussteil ausgestaltet ist.

Das erfindungsgemäße Rückschlagventil weist einen Ventilkörper auf, der von dem in Durchströmrichtung einströmenden Wasser aus einer Schließstellung, in welcher Schließstellung der Ventilkörper an einem ersten Ventilsitz dicht anliegt, gegen eine Offenstellung bewegbar ist, in welcher der Ventilkörper vom ersten Venilsitz abgehoben ist. Da der Ventilkörper durch das in üblicher Richtung anströmende Wasser von seiner Schließstellung in eine Offenstellung bewegt wird, kann das in üblicher Durchflussrichtung anströmende Wasser das Rückschlagventil passieren.

Da ein entgegen der üblichen Durchströmrichtung fließender Rückstrom den Ventilkörper demgegenüber gegen den ersten Ventilsitz presst, werden solche Rückströme wirkungsvoll verhindert. Übersteigt der auf der Abströmseite des Rückschlagventils anstehende Druck einen festgelegten Maximalwert und droht dadurch eine druckbedingte Zerstörung der beispielsweise in der Armatur befindlichen Bauteile, tritt ein Überdruckventil in Funktion, das in das erfindungsgemäße Rückschlagventil integriert ist. Dieses Überdruckventil weist einen Schließkörper auf, der durch den Druck des entgegen der Durchströmrichtung rückströmenden Wassers von einer Schließstellung, in welcher der Schließkörper an einem zweiten Ventilsitz dicht anliegt, gegen eine Rückstellkraft in eine Offenposition abgehoben ist, in welche Offenposition der Schließkörper des Überdruckventils vom zweiten Ventilsitz abgehoben ist. Dabei ist die auf den Schließkörper des Überdruckventils einwirkende Rückstellkraft im Vergleich zu der auf den Ventilkörper einwirkenden Rückstellkraft größer bemessen, so dass sich das Rückschlagventil den entgegen der üblichen Durchströmrichtung anströmenden Rückströmen entgegenstellt, während bei einem übermäßigen Druck dieser Rückströme schließlich das Überdruckventil geringfügig öffnet und den auf der Abströmseite des Ventilkörpers des Rückschlagventils anstehenden Überdruck ausreichend abbaut.

Dabei kann es vorteilhaft sein, wenn die vom Schließkörperkern getragene Haut oder Schicht aus einem Elastomer, vorzugsweise aus Gummi, Silikon oder einem thermoplastischen Elastomer, hergestellt ist.

Die einfache Herstellung des erfindungsgemäßen Rückschlagventils sieht erfindungsgemäß vor, dass der Schließkörper des Überdruckventils als Zwei- oder Mehrkomponenten-Kunststoffspritzgussteil ausgestaltet ist.

Damit der Ventilkörper des Rückschlagventils beziehungsweise der Schließkörper des Überdruckventils in ihrer Schließposition sicher gegen den ersten beziehungsweise den zweiten Ventilsitz gepresst werden, ist es vorteilhaft, wenn die auf den Ventilkörper einwirkende Rückstellkraft und/oder die auf den Schließkörper einwirkende Rückstellkraft durch zumindest ein gummi- oder federelastisches Rückstellelement aufgebracht ist.

Dabei sieht eine besonders einfache und dennoch funktionssichere Ausführung gemäß der Erfindung vor, dass das zumindest eine Rückstellelement als Druckfeder ausgebildet ist.

Um die Montage des erfindungsgemäßen Rückschlagventils zu erleichtern und um eine funktionsbeeinträchtigende Montage des erfindungsgemäßen Rückschlagventils zu verhindern, ist es vorteilhaft, wenn das Rückschlagventil ein Ventilgehäuse hat, und wenn das Überdruckventil in das Rückschlagventil integriert ist.

Dabei sieht eine besonders kompakte und platzsparende Ausführung gemäß der Erfindung vor, dass das Überdruckventil in den Ventilkörper des Rückschlagventils integriert ist.

Eine Weiterbildung gemäß der Erfindung sieht vor, dass den Ventilkörper des Rückschlagventils ein insbesondere zentral angeordneter Überdruckkanal durchsetzt, in welchem Überdruckkanal der Schließkörper des Überdruckventils zwischen der Schließstellung und der Offenposition des Überdruckventils bewegbar angeordnet ist.

Um die Funktionssicherheit des in das erfindungsgemäße Rückschlagventil integrierten Überdruckventils zu erhöhen, ist es vorteilhaft, wenn der zweite Ventilsitz durch eine Ringfläche gebildet ist, die sich entgegen der Durchströmrichtung vorzugsweise konisch erweitert.

Damit nun der Schließkörper des Überdruckventils sich nur in einem linienförmig umlaufenden Teilbereich an die Ringfläche des zweiten Ventilsitzes in Schließstellung anlegt, ist es vorteilhaft, wenn der Schließkörper zumindest in seinem in Schließstellung am Ventilsitz anliegenden und/oder die Haut oder Schicht tragenden Umfangsteilbereich eine ballen- oder kugelsegmentförmige Formgebung hat. Um den Schließkörper des Überdruckventils während der Schiebebewegungen im Überdruckkanal sicher zu führen, ist es vorteilhaft, wenn der Schließkörper auf seiner Zuströmseite und/oder auf seiner Abströmseite einen Zapfen trägt, wobei die Zuströmseite des Schließkörpers die in Durchströmrichtung des Überdruckventils angeströmte Stirnseite und die Abströmseite die demgegenüber abgewandte Stirnseite des Schließkörpers ist.

Die Montage des erfindungsgemäßen Rückschlagventils auch im Bereich seines Überdruckventils wird erleichtert, wenn der am Schließkörper auf der Zuströmseite angeordnete und in Durchströmrichtung orientierte Zapfen eine zylindrische Zapfenform aufweist.

Um einem Verkanten auch eines länglich ausgebildeten Schließkörpers im Überdruckkanal entgegenzuwirken, ist es vorteilhaft, wenn der am Schließkörper auf der Abströmseite angeordnete und entgegen der Durchströmrichtung orientierte Zapfen sich zu seinem freien Zapfenende hin verjüngt und vorzugsweise kegelstumpfförmig ausgebildet ist.

Einem Verklemmen des Schließkörpers am zweiten Ventilsitz wird entgegengewirkt, wenn der Schließkörperkern einen Durchmesser aufweist, der im Vergleich zum kleinsten Durchmesser des Ventilsitzes größer ist.

Bevorzugte Ausführungsformen gemäß der Erfindung sehen vor, dass der Schließkörperkern aus einem thermoplastischen Kunststoff, insbesondere aus einem POM-Kunststoff oder einem PBT-(Polybutylenterephthalat-)Kunststoff hergestellt ist. Ein solcher, aus einem harten Thermoplast hergestellter Schließkörperkern weist eine ausreichende Stabilität auf.

Vorteilhaft ist es, wenn die elastische Haut oder Schicht aus Silikon besteht.

Dabei kann die Haut oder Schicht eine Schichtdicke von 0,10 bis 0,50 mm, vorzugsweise von 0,15 bis 0,32 mm und insbesondere von 0,15 bis 0,22 mm, haben.

Vorteilhaft ist es, wenn die Haut oder Schicht eine Shore-Härte von 30° bis 100° Sh-A, vorzugsweise von 70° bis 90° Sh-A, hat.

Eine weiterbildende Ausführungsform gemäß der Erfindung sieht vor, dass das Rückschlagventil im Bereich seines Ventilsitzes aus einem Hartwerkstoff und/oder einem harten beziehungsweise hartelastischen thermoplastischen Kunststoff hergestellt ist.

Weiterbildungen gemäß der Erfindung ergeben sich aus den Ansprüchen in Verbindung mit der Zeichnung sowie der Beschreibung. Nachstehend wird die Erfindung anhand eines bevorzugten Ausführungsbeispieles noch näher beschrieben.

Es zeigt:
- Fig. 1: ein in eine sanitäre Wasserleitung eingesetztes Rückschlagventil, in das ein Überdruckventil integriert ist,
- Fig. 2: das Rückschlagventil aus Figur 1 in einem Längsschnitt, wobei den Ventilkörper des Rückschlagventiles ein Überdruckkanal durchsetzt, in welchem Überdruckkanal der Schließkörper eines Überdruckventils von einer Schließstellung gegen eine Rückstellkraft in eine Offenstellung bewegbar ist, und wobei der Ventilkörper des Rückschlagventiles sich in seiner Offenstellung befindet,
- Fig. 3: das Rückschlagventil aus den Figuren 1 und 2 mit seinem an einem ersten Ventilsitz anliegenden Ventilkörper, wobei sich hier auch das in den Ventilkörper integrierte Überdruckventil in seiner Schließposition befindet,
- Fig. 4: den vereinzelt in einem Längsschnitt dargestellten Ventilkörper des in den Figuren 1 bis 3 gezeigten Rückschlagventiles mit dem darin integrierten und hier in seiner Schließposition befindlichen Überdruckventil,
- Fig. 5: das hier ebenfalls längsgeschnitten dargestellte Rückschlagventil aus den Figuren 1 bis 3 in der Schließstellung seines Ventilkörpers, wobei sich das in den Ventilkörper integrierte Überdruckventil hier in seiner Offenposition befindet,
- Fig. 6: den Ventilkörper des in den Figuren 1 bis 3 und 5 gezeigten Rückschlagventiles mit dem sich in seiner Offenposition befindlichen Überdruckventil,
- Fig. 7: das hier in einem vergrößerten Längsschnitt dargestellte Rückschlagventil aus den Figuren 1 bis 3 und 5 in Schließposition seines Überdruckventils,
- Fig. 8: den Ventilkörper des in den Figuren 1 bis 3, 5 und 7 gezeigten Rückschlagventils mit dem sich in seiner Schließposition befindlichen Überdruckventil,
- Fig. 9: das hier ebenfalls längsgeschnittene Rückschlagventil aus den Figuren 1 bis 3, 5 und 7 in Offenposition seines Überdruckventiles und
- Fig. 10: den Ventilkörper des in den Figuren 1 bis 3, 5, 7 und 9 gezeigten Rückschlagventiles mit dem sich in seiner Offenposition befindlichen Überdruckventil.

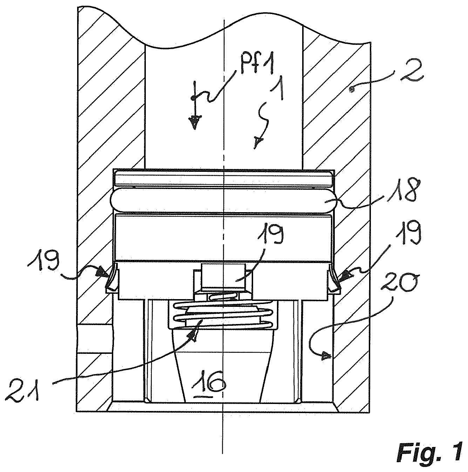

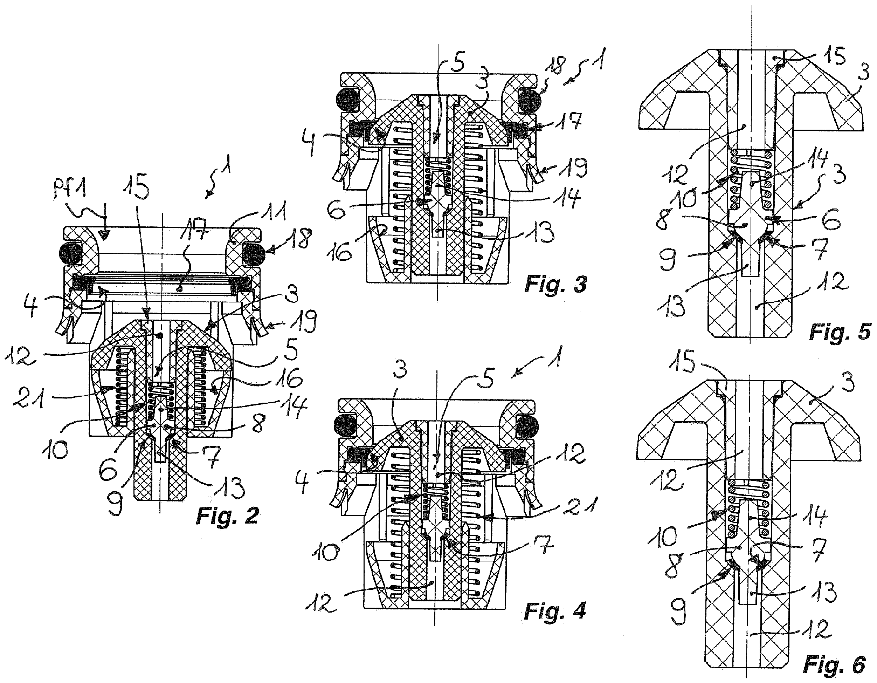

In den Figuren 1 bis 3, 5, 7 und 9 ist ein Rückschlagventil 1 gezeigt, das beispielsweise in Zuströmrichtung vor einem Einhebelmischventil in die Zulaufleitung 2 eines Kalt- oder Warmwasserzulaufes eingesetzt sein kann. Das Rückschlagventil 1 weist einen Ventilkörper 3 auf, der von dem in Durchströmrichtung anströmenden Wasser aus der in den Figuren 3, 5, 7 und 9 gezeigten Schließstellung, in welcher Schließstellung der Ventilkörper 3 an einem ersten Ventilsitz 4 dicht anliegt, gegen eine Rückstellkraft in die in Figur 2 gezeigte Offenstellung bewegbar ist, in welcher der Ventilkörper 3 vom ersten Ventilsitz 4 abgehoben ist. Da der Ventilkörper 3 durch das in üblicher Durchströmrichtung Pf1 anströmende Wasser von seiner Schließstellung in die Offenstellung bewegt wird, kann das in üblicher Durchflussrichtung Pf1 anströmende Wasser das Rückschlagventil 1 passieren.

Demgegenüber presst ein entgegen der üblichen Durchströmrichtung Pf1 fließender Rückstrom den Ventilkörper 3 gegen den ersten Ventilsitz 4, so dass solche Rückströme den Ventilsitz 4 nicht entgegen der Durchströmrichtung Pf1 durchströmen können.

Übersteigt der auf der Abströmseite des Rückschlagventils anstehende Druck einen festgelegten Maximalwert und droht dadurch eine druckbedingte Zerstörung der beispielsweise in einer abströmseitig angeordneten Armatur befindlichen Bauteile, tritt ein Überdruckventil 5 in Funktion, das in das Rückschlagventil 1 integriert ist. Dieses Überdruckventil 5 weist einen Schließkörper 6 auf, der durch den Druck des entgegen der Durchströmrichtung Pf1 rückströmenden Wassers von einer Schließstellung, in welcher der Schließkörper 6 an einem zweiten Ventilsitz 7 dicht anliegt, gegen eine Rückstellkraft in eine Offenposition, in welcher Offenposition der Schließkörper 6 vom zweiten Ventilsitz 7 abgehoben ist, in Pfeilrichtung Pf2 des Überdruckventils 5 bewegbar ist. Dabei ist die auf den Schließkörper 6 des Überdruckventils 5 einwirkende Rückstellkraft im Vergleich zu der auf den Ventilkörper 3 einwirkenden Rückstellkraft größer bemessen.

In den Figuren 4 und 6 bis 10 ist gut erkennbar, dass der Schließkörper 6 des Überdruckventils 5 einen Schließkörperkern 8 aus einem ersten Material aufweist, welcher Schließkörperkern 8 in seinem in Schließstellung am zweiten Ventilsitz 7 dicht anliegenden Teilbereich eine Haut oder eine Schicht 9 aus einem zweiten, demgegenüber weicheren und/oder elastischeren Material trägt. Da die den Schließkörperkern 8 zumindest in seinem am Ventilsitz 7 des Überdruckventils 5 anliegenden Teilbereich umgebende Schicht 9 oder Haut aus einem gegenüber dem Schließkörperkern 8 weicheren und/oder elastischeren Material besteht, kann sich der Schließkörper 6 des Überdruckventils 5 in dessen Schließposition gut an den zweiten Ventilsitz 7 anlegen, wobei auch Fertigungstoleranzen gut ausgeglichen werden. Da der Schließkörper 6 des Überdruckventils 5 einen Schließkörperkern 8 aus einem demgegenüber härterem Material aufweist und nicht aus demselben weichen und/oder elastischen Material, wie die Haut oder Schicht 9, besteht, wird ein überstarkes Eindrücken des Schließkörpers 6 in den Ventilsitz 7 und dadurch bedingte Funktionsstörungen des Überdruckventils 5 vermieden. Das hier dargestellte Rückschlagventil 1 zeichnet sich daher auch insoweit durch eine hohe Funktionssicherheit selbst bei hohen Öffnungsdrücken des Überdruckventils 5 aus.

Dabei kann der Schließkörper 6 des Überdruckventils 5 auch als Zwei- oder Mehrkomponenten-Kunststoffspritzgussteil ausgestaltet sein.

Wie aus einer zusammenschauenden Betrachtung der Figuren 1 bis 10 deutlich wird, werden sowohl die auf den Ventilkörper 3 einwirkende Rückstellkraft als auch die auf den Schließkörper 6 einwirkende Rückstellkraft jeweils durch zumindest ein gummi- oder - wie hier - ein federelastisches Rückstellelement aufgebracht. Dabei sind die dem Ventilkörper 3 beziehungsweise dem Schließkörper 6 zugeordneten Rückstellelemente als Druckfedern 10, 21 ausgebildet.

In den Figuren 1 bis 3, 5, 7 und 9 ist erkennbar, dass das Rückschlagventil 1 ein Ventilgehäuse 11 hat, und dass das Überdruckventil 5 in das Rückschlagventil 1 integriert ist. Dabei wird aus einer zusammenschauenden Betrachtung der Figuren 1 bis 10 deutlich, dass das Überdruckventil 5 in den Ventilkörper 3 des Rückschlagventils 1 integriert ist. Dazu wird der Ventilkörper 3 des Rückschlagventils 1 von einem zentral angeordneten Überdruckkanal 12 durchsetzt, in welchem Überdruckkanal 12 der Schließkörper 6 zwischen der Schließstellung und der Offenposition des Überdruckventils 5 bewegbar angeordnet ist.

Der dem Schließkörper 6 des Überdruckventils 5 zugeordnete zweite Ventilsitz 7 ist durch eine Ringfläche gebildet, die sich entgegen der Durchströmrichtung Pf1 vorzugsweise konisch erweitert. Da der Schließkörper 6 zumindest in seinem in Schließstellung am zweiten Ventilsitz 7 anliegenden und die Haut oder Schicht 9 tragenden Umfangsteilbereich eine ballen- oder kugelsegmentförmige Formgebung hat, liegt der Schließkörper 6 in Schließposition des Überdruckventils 5 nur in einem linienförmig umlaufenden Bereich an der Ringfläche des zweiten Ventilsitzes 7 an.

Der Schließkörper 6 weist hier eine langgezogene Form auf. Dabei trägt der Schließkörper 6 sowohl auf seiner Zuströmseite als auch auf seiner Abströmseite jeweils einen Zapfen 13, 14. Während der am Schließkörper 6 auf der Zuströmseite angeordnete und in Durchströmrichtung Pf1 orientierte Zapfen 13 eine zylindrische Zapfenform aufweist, ist der am Schließkörper 6 auf der Abströmseite angeordnete und entgegen der Durchströmrichtung Pf1 orientierte Zapfen 14 kegelstumpfförmig ausgebildet und verjüngt sich zu seinem freien Zapfenende hin.

Damit der die elastische Schicht 9 tragende Schließkörperkern 8 nicht im lichten Öffnungsquerschnitt des Ventilsitzes 7 eintaucht und sich dort verklemmt, weist der Schließkörperkern 8 einen Durchmesser auf, der im Vergleich zum kleinsten Durchmesser des Ventilsitzes 7 größer ist.

Der Schließkörperkern 8 kann aus einem vergleichsweise harten thermoplastischen Kunststoffmaterial, beispielsweise aus POM- oder PBT-, oder aus jedem anderen geeigneten Material hergestellt werden. Die elastische Haut oder Schicht 9 besteht demgegenüber vorzugsweise aus Silikon. Dabei kann die Haut oder Schicht 9 eine Schichtdicke von 0,10 bis 0,50 mm, vorzugsweise von 0,15 bis 0,40 mm und insbesondere von 0,17 bis 0,32 mm, haben. Vorteilhaft ist es, wenn diese Haut oder Schicht 9 eine Shore-Härte von 30° bis 100° Sh-A, vorzugsweise von 70° bis 90° Sh-A hat.

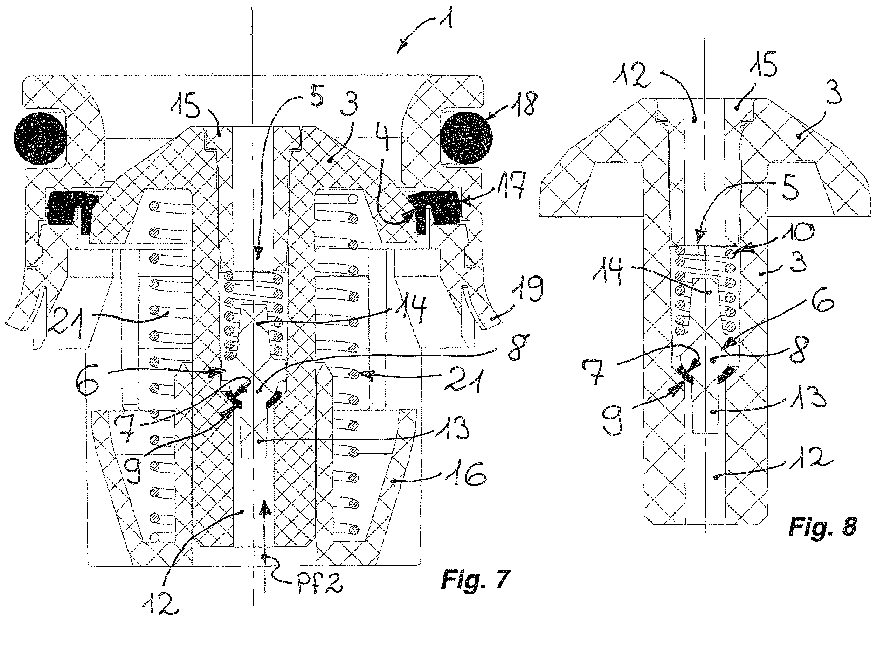

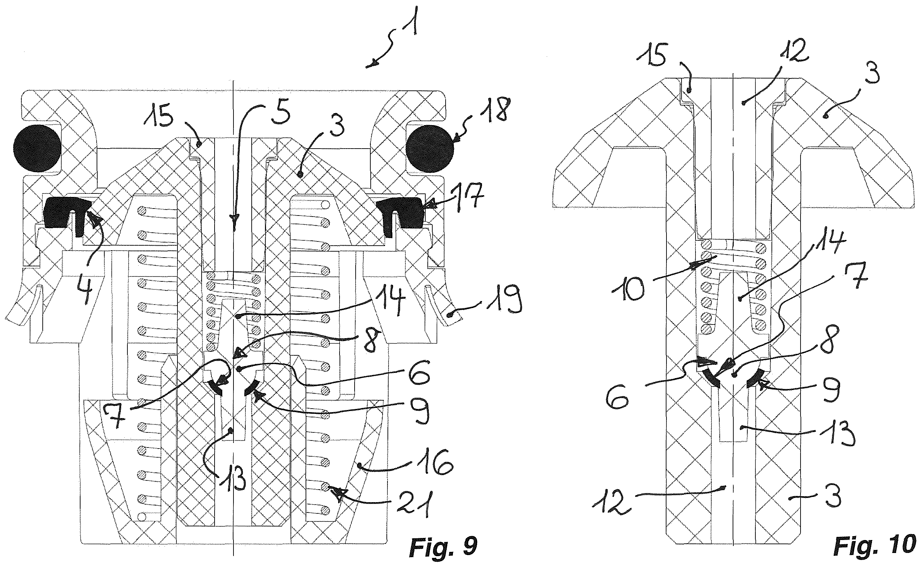

Der Ventilsitz 7 des Überdruckventils 5 ist vorzugsweise aus einem Hartwerkstoff und insbesondere aus einem harten thermoplastischen Kunststoffmaterial hergestellt. Aus einem Vergleich insbesondere der Figuren 8 und 10 wird deutlich, dass das Überdruckventil 5 in seiner in Figur 10 gezeigten Offenstellung nur soweit öffnet, dass das Rückschlagventil 1 im Bereich des Ventilsitzes 7 seines Überdruckventils 5 undicht wird. Dabei hebt sich der Schließkörper 6 des Überdruckventils 5 nur ein wenig vom Ventilsitz 7 ab, um den Wasserweg für eine geringe Teilmenge des auf der Abströmseite mit Überdruck anstehenden Wassers freizugeben und um den Überdruck entsprechend abzubauen.

In den Figuren 7 und 9 ist erkennbar, dass bei der Montage des hier gezeigten Rückschlagventils 1 zunächst der Schließkörper 6 mit seinem in Durchströmrichtung Pf1 des Rückschlagventils orientierten Zapfen 13 in den Überdruckkanal 12 eingeschoben wird. Nachdem die als Rückstellkraft dienende Druckfeder 10 auf den abströmseitigen und entgegen der Durchströmrichtung Pf1 des Rückschlagventils orientierten Zapfen 14 aufgesetzt wurde, wird der Überdruckkanal 12 mit einem hülsenförmigen Stopfen 15 verengt, welcher Stopfen 15 zwischen sich und dem Schließkörper 6 des Überdruckventils 5 die Druckfeder 10 einspannt.

Das Rückschlagventil 1 weist ein Ventilgehäuse 11 auf, das auf seiner Abströmseite eine taschenförmige Federaufnahme 16 trägt. In dieser Federaufnahme 16 ist die als Rückstellkraft dienende Druckfeder 21 derart eingesetzt, dass diese Druckfeder 21 zwischen der Federaufnahme 16 und der Abströmseite des Ventilkörpers 3 eingespannt ist. Der Ventilkörper 3 ist hier etwa pilzförmig ausgebildet. Am Ventilsitz 4 des Rückschlagventiles 1 ist eine Ringdichtung 17 vorgesehen, an welcher Ringdichtung 17 der Ventilkörper 3 in der Schließstellung des Rückschlagventils 1 dicht anliegt. Am Außenumfang des Ventilgehäuses 11 ist ein Dichtring 18 vorgesehen, der den Ringspalt zwischen dem Außenumfang des Ventilgehäuses 11 und dem Innenumfang der das Ventilgehäuse 11 des Rückschlagventils 1 in sich aufnehmenden Zulaufleitung 2 abdichtet. Am Umfang des Ventilgehäuses 11 stehen Rastarme 19 nach außen vor, die sich in Gebrauchsstellung des Rückschlagventiles 1 an einem Ringabsatz am Innenumfang der Zulaufleitung 2 abstützen. Dabei ist das Ventilgehäuse 11 in eine Einsetzöffnung 20 der Zulaufleitung 2 eingesetzt, welche Einsetzöffnung 20 als Querschnittserweiterung dieser Zulaufleitung 2 ausgebildet ist.

### Bezugszeichenliste

- 1: Rückschlagventil
- 2: Zulaufleitung
- 3: Ventilkörper
- 4: (erster) Ventilsitz des Rückschlagventils 1
- 5: Überdruckventil
- 6: Schließkörper
- 7: (zweiter) Ventilsitz des Überdruckventils 5
- 8: Schließkörperkern
- 9: Schicht
- 10: Druckfeder des Überdruckventils
- 11: Ventilgehäuse
- 12: Überdruckkanal
- 13: in Durchströmrichtung Pf1 des Rückschlagventils orientierter zuströmseitiger Zapfen am Schließkörper 6
- 14: entgegen der Durchströmrichtung Pf1 des Rückschlagventils orientierter abströmseitiger Zapfen am Schließkörper 6
- 15: Stopfen
- 16: Federaufnahme
- 17: Ringdichtung
- 18: Dichtring
- 19: Rastarme
- 20: Einsetzöffnung
- 21: Druckfeder des Rückschlagventils
- Pf1: Durchströmrichtung des Rückschlagventils 1
- Pf2: Durchströmrichtung des Überdruckventils 5

## Patentansprüche

1. Rückschlagventil (1) mit einem Ventilkörper (3), der (3) von dem in Durchströmrichtung (Pfl) anströmenden Wasser aus einer Schließstellung, in welcher Schließstellung der Ventilkörper (3) an einem ersten Ventilsitz (4) dicht anliegt, gegen eine Rückstellkraft in eine Offenstellung, in welcher der Ventilkörper (3) vom ersten Ventilsitz (4) abgehoben ist, bewegbar ist, und mit einem Überdruckventil (5), das (5) einen Schließkörper (6) hat, welcher (6) durch den Druck des entgegen der Durchströmrichtung (Pfl) rückströmenden Wassers von einer Schließstellung, in welcher der Schließkörper (6) an einem zweiten Ventilsitz (7) dicht anliegt, gegen eine Rückstellkraft in eine Offenposition, in welcher Offenposition der Schließkörper (6) vom zweiten Ventilsitz (7) abgehoben ist, bewegbar ist, wobei die auf den Schließkörper (6) des Überdruckventils (5) einwirkende Rückstellkraft im Vergleich zu der auf den Ventilkörper (3) einwirkenden Rückstellkraft größer ist,
wobei der Schließkörper (6) des Überdruckventils (5) einen Schließkörperkern (8) aus einem ersten Material aufweist,
**dadurch gekennzeichnet, dass**
der Schließkörperkern (8) zumindest in seinem in Schließstellung am zweiten Ventilsitz (7) dicht anliegenden Teilbereich eine Haut oder eine Schicht (9) aus einem zweiten, demgegenüber weicheren und/oder elastischen Material trägt und dass der Schließkörper (6) des Überdruckventils (5) als Zwei- oder Mehrkomponenten-Kunststoffspritzgussteil ausgestaltet ist.

2. Rückschlagventil nach Anspruch 1, **dadurch gekennzeichnet, dass** die auf den Ventilkörper (3) einwirkende Rückstellkraft und/oder die auf den Schließkörper (6) einwirkende Rückstellkraft durch zumindest ein gummi- oder federelastisches Rückstellelement aufgebracht ist.

3. Rückschlagventil nach einem der Ansprüche 1 bis 2, **dadurch gekennzeichnet, dass** das zumindest eine Rückstellelement (21; 10) als Druckfeder ausgebildet ist.

4. Rückschlagventil nach einem der Ansprüche 1 bis 3, **dadurch gekennzeichnet, dass** das Rückschlagventil (1) ein Ventilgehäuse (11) hat, und dass das Überdruckventil (5) in das Rückschlagventil (1) integriert ist.

5. Rückschlagventil nach einem der Ansprüche 1 bis 4, **dadurch gekennzeichnet, dass** das Überdruckventil (5) in den Ventilkörper (3) integriert ist.

6. Rückschlagventil nach einem der Ansprüche 1 bis 5, **dadurch gekennzeichnet, dass** den Ventilkörper (3) ein insbesondere zentral angeordneter Überdruckkanal (12) durchsetzt, in welchem Überdruckkanal (12) der Schließkörper (6) zwischen der Schließstellung und der Offenposition des Überdruckventils (5) bewegbar angeordnet ist.

7. Rückschlagventil nach einem der Ansprüche 1 bis 6, **dadurch gekennzeichnet, dass** der zweite Ventilsitz (7) durch eine Ringfläche gebildet ist, die sich entgegen der Durchströmrichtung (Pfl) vorzugsweise konisch erweitert.

8. Rückschlagventil nach einem der Ansprüche 1 bis 7, **dadurch gekennzeichnet, dass** der Schließkörper (6) zumindest in seinem in Schließstellung am Ventilsitz (7) anliegenden und/oder die Haut oder Schicht (9) tragenden Umfangsteilbereich eine ballen- oder kugelsegmentförmige Formgebung hat.

9. Rückschlagventil nach einem der Ansprüche 1 bis 8, **dadurch gekennzeichnet, dass** der Schließkörper (6) auf seiner Zuströmseite und/oder auf seiner Abströmseite einen Zapfen (13; 14) trägt.

10. Rückschlagventil nach Anspruch 9, **dadurch gekennzeichnet, dass** der am Schließkörper (6) auf der Zuströmseite angeordnete und in Durchströmrichtung (Pfl) orientierte Zapfen (13) eine zylindrische Zapfenform aufweist.

11. Rückschlagventil nach Anspruch 9 oder 10, **dadurch gekennzeichnet, dass** der am Schließkörper (6) auf der Abströmseite angeordnete und entgegen der Durchströmrichtung (Pfl) orientierte Zapfen (14) sich zu seinem freien Zapfenende hin verjüngt und vorzugsweise kegelstumpfförmig ausgebildet ist.

12. Rückschlagventil nach einem der Ansprüche 1 bis 11, **dadurch gekennzeichnet, dass** der Schließkörperkern (8) einen Durchmesser aufweist, der im Vergleich zum kleinsten Durchmesser des Ventilsitzes (7) größer ist.

13. Rückschlagventil nach einem der Ansprüche 1 bis 12, **dadurch gekennzeichnet, dass** der Schließkörperkern (8) aus einem thermoplastischen Kunststoff, insbesondere aus POM- oder PBT-Kunststoff hergestellt ist.

14. Rückschlagventil nach einem der Ansprüche 1 bis 13, **dadurch gekennzeichnet, dass** die elastische Haut oder Schicht (9) aus Silikon besteht.

15. Rückschlagventil nach einem der Ansprüche 1 bis 14, **dadurch gekennzeichnet, dass** die Haut oder Schicht (8) eine Schichtdicke von 0,10 bis 0,50 mm, vorzugsweise von 0,15 bis 0,32 mm und insbesondere von 0,15 bis 0,22 mm hat.

16. Rückschlagventil nach einem der Ansprüche 1 bis 15, **dadurch gekennzeichnet, dass** die Haut oder Schicht (9) eine Shore-Härte von 30° bis 100° Sh-A, vorzugsweise von 70° bis 90° Sh-A, hat.

17. Rückschlagventil nach einem der Ansprüche 1 bis 16, **dadurch gekennzeichnet, dass** das Rückschlagventil (1) im Bereich seines zweiten Ventilsitzes (7) aus einem Hartwerkstoff und/oder einem harten bzw. hartelastischen thermoplastischen Kunststoff hergestellt ist.

18. Rückschlagventil nach einem der Ansprüche 1 bis 17, **dadurch gekennzeichnet, dass** die Haut oder Schicht (9) aus einem Elastomer, vorzugsweise aus Gummi, Silikon oder einem thermoplastischen Elastomer, hergestellt ist.

## Claims

1. Check valve (1) having a valve body (3) which (3) by the incoming water in the flow direction (Pfl) is movable counter to a restoring force, from a closed position in which closed position the valve body (3) bears tightly on a first valve seat (4), to an open position in which the valve body (3) is raised from the first valve seat (4), and having a pressure relief valve (5) which (5) has a closing member (6) which (6) by the pressure of the water returning counter to the flow direction (Pfl) is movable counter to a restoring force, from a closed position in which the closing member (6) bears tightly on a second valve seat (7), to an open position in which open position the closing member (6) is raised from the second valve seat (7), wherein the restoring force acting on the closing member (6) of the pressure relief valve (5) is greater in comparison to the restoring force acting on the valve body (3), wherein the closing member (6) of the pressure relief valve (5) has a closing member core (8) from a first material, **characterized in that**
the closing member core (8) at least in the sub-region thereof that in the closed position bears tightly on the second valve seat (7) carries a film or a layer (9) from a second, comparatively softer and/or elastic material and **in that** the closing member (6) of the pressure relief valve (5) is designed as a bi-component or multicomponent injection-molded plastic part.

2. Check valve according to Claim 1, **characterized in that** the restoring force acting on the valve body (3) and/or the restoring force acting on the closing member (6) is applied by at least one rubber-elastic or spring-elastic restoring element.

3. Check valve according to either of Claims 1 and 2, **characterized in that** the at least one restoring element (21; 10) is configured as a compression spring.

4. Check valve according to one of Claims 1 to 3, **characterized in that** the check valve (1) has a valve housing (11), and **in that** the pressure relief valve (5) is integrated in the check valve (1).

5. Check valve according to one of Claims 1 to 4, **characterized in that** the pressure relief valve (5) is integrated in the valve body (3).

6. Check valve according to one of Claims 1 to 5, **characterized in that** the valve body (3) is penetrated by an in particular centrally disposed pressure relief duct (12), in which pressure relief duct (12) the closing member (6) is disposed so as to be movable between the closed position and the open position of the pressure relief valve (5).

7. Check valve according to one of Claims 1 to 6, **characterized in that** the second valve seat (7) is formed by an annular face which preferably widens conically counter to the flow direction (Pf1).

8. Check valve according to one of Claims 1 to 7, **characterized in that** the closing member (6), at least in the circumferential sub-region thereof that in the closed position bears on the valve seat (7) and/or carries the film or layer (9), is shaped in the form of a ball segment or spherical segment.

9. Check valve according to one of Claims 1 to 8, **characterized in that** the closing member (6) on the inflow side thereof and/or on the outflow side thereof carries a stopper (13; 14).

10. Check valve according to Claim 9, **characterized in that** the stopper (13) that on the closing member (6) is disposed on the inflow side and is oriented in the flow direction (Pfl) has a cylindrical stopper shape.

11. Check valve according to Claim 9 or 10, **characterized in that** the stopper (14) that on the closing member (6) is disposed on the outflow side and is oriented counter to the flow direction (Pfl) tapers toward the free stopper end thereof and is preferably configured so as to be frustoconical.

12. Check valve according to one of Claims 1 to 11, **characterized in that** the closing member core (8) has a diameter which is larger in comparison to the smallest diameter of the valve seat (7).

13. Check valve according to one of Claims 1 to 12, **characterized in that** the closing member core (8) is produced from a thermoplastic plastics material, in particular from a POM plastics material or a PBT plastics material.

14. Check valve according to one of Claims 1 to 13, **characterized in that** the elastic film or layer (9) is composed of silicone.

15. Check valve according to one of Claims 1 to 14, **characterized in that** the film or layer (8) has a layer thickness of 0.10 to 0.50 mm, preferably of 0.15 to 0.32 mm, and in particular of 0.15 to 0.22 mm.

16. Check valve according to one of Claims 1 to 15, **characterized in that** the film or layer (9) has a Shore hardness of 30° to 100° Sh-A, preferably of 70° to 90° Sh-A.

17. Check valve according to one of Claims 1 to 16, **characterized in that** the check valve (1) in the region of the second valve seat (7) thereof is produced from a hard material and/or a hard or hard-elastic thermoplastic plastics material.

18. Check valve according to one of Claims 1 to 17, **characterized in that** the film or layer (9) is produced from an elastomer, preferably from rubber, silicone or a thermoplastic elastomer.

## Revendications

1. Soupape anti-retour (1) dotée d'un corps de soupape (3) qui (3) peut être déplacé à l'encontre d'une force de rappel par l'eau affluant dans une direction d'écoulement (Pf1), d'une position de fermeture dans laquelle le corps de soupape (3) est appliqué de manière étanche sur un premier siège de soupape (4) à une position d'ouverture dans laquelle le corps de soupape (3) est soulevé du premier siège de soupape (4), et dotée d'une soupape de surpression (5) qui (5) possède un corps de fermeture (6) qui (6) peut être déplacé à l'encontre d'une force de rappel par la pression de l'eau refluant à l'encontre de la direction d'écoulement (Pf1), d'une position de fermeture dans laquelle le corps de fermeture (6) est appliqué de manière étanche sur un deuxième siège de soupape (7) à une position d'ouverture dans laquelle le corps de fermeture (6) est soulevé du deuxième siège de soupape (7), la force de rappel agissant sur le corps de fermeture (6) de la soupape de surpression (5) étant supérieure à la force de rappel agissant sur le corps de soupape (3) et le corps de fermeture (6) de la soupape de pression (5) comportant un noyau de corps de fermeture (8) fait d'une première matière,
**caractérisée en ce que** le noyau de corps de fermeture (8) porte au moins dans sa partie appliquée de manière étanche sur le deuxième siège de soupape (7) une peau ou une couche (9) faite d'une matière plus souple et/ou élastique et que le corps de fermeture (6) de la soupape de surpression (5) est constitué comme une pièce moulée par injection en matière plastique à deux ou à plusieurs composants.

2. Soupape anti-retour selon la revendication 1, **caractérisée en ce que** la force de rappel agissant sur le corps de soupape (3) et/ou la force de rappel agissant sur le corps de fermeture (4) est appliquée par au moins un élément de rappel en caoutchouc ou élastique.

3. Soupape anti-retour selon une des revendications 1 à 2, **caractérisée en ce que** l'au moins un élément de rappel (21 ; 10) est constitué comme un ressort de compression.

4. Soupape anti-retour selon une des revendications 1 à 3, **caractérisée en ce que** cette soupape anti-retour (1) possède un boîtier de soupape (11) et que la soupape de surpression (5) est intégrée dans cette soupape anti-retour (1).

5. Soupape anti-retour selon une des revendications 1 à 4, **caractérisée en ce que** la soupape de surpression (5) est intégrée dans le corps de soupape (3).

6. Soupape anti-retour selon une des revendications 1 à 5, **caractérisée en ce qu'**un canal de surpression (12) dans lequel (12) le corps de fermeture (6) est agencé de façon mobile entre la position de fermeture et la position d'ouverture de la soupape de surpression (5) traverse le corps de soupape (3).

7. Soupape anti-retour selon une des revendications 1 à 6, **caractérisée en ce que** le deuxième siège de soupape (7) est formé par une surface annulaire qui s'élargit de préférence de façon conique à l'encontre de la direction d'écoulement (Pf1).

8. Soupape anti-retour selon une des revendications 1 à 7, **caractérisée en ce que** le corps de fermeture (6) a, au moins dans sa partie périphérique appliquée contre le siège de soupape (7) en position de fermeture et/ou portant la peau ou la couche (9), un façonnage en forme de segment de balle ou de bille.

9. Soupape anti-retour selon une des revendications 1 à 8, **caractérisée en ce que** le corps de fermeture (6) porte un tenon (13 ; 14) sur son côté amont et/ou sur son côté aval.

10. Soupape anti-retour selon la revendication 9, **caractérisée en ce que** le tenon (13) disposé sur le corps de fermeture (6) du côté amont et orienté dans la direction d'écoulement (Pfl) présente une forme de tenon cylindrique.

11. Soupape anti-retour selon la revendication 9 ou 10, **caractérisée en ce que** le tenon (14) disposé sur le corps de fermeture (6) du côté aval et orienté à l'encontre de la direction d'écoulement (Pfl) se rétrécit en direction de son extrémité libre et est de préférence configuré en forme de cône tronqué.

12. Soupape anti-retour selon une des revendications 1 à 11, **caractérisée en ce que** le noyau de corps de fermeture (8) présente un diamètre qui est supérieur au plus petit diamètre du siège de soupape (7).

13. Soupape anti-retour selon une des revendications 1 à 12, **caractérisée en ce que** le noyau de corps de fermeture (8) est fabriqué dans une matière thermoplastique, en particulier dans une matière plastique POM ou PBT.

14. Soupape anti-retour selon une des revendications 1 à13, **caractérisée en ce que** la peau élastique ou la couche (9) est en silicone.

15. Soupape anti-retour selon une des revendications 1 à 14, **caractérisée en ce que** la peau ou la couche (8) a une épaisseur de couche de 0,10 à 0,50 mm, de préférence de 0,15 à 0,32 mm et en particulier de 0,15 à 0,22 mm.

16. Soupape anti-retour selon une des revendications 1 à 15, **caractérisée en ce que** la peau ou la couche (9) a une dureté Shore de 30° à 100° Sh-A, de préférence de 70° à 90° Sh-A.

17. Soupape anti-retour selon une des revendications 1 à 16, **caractérisée en ce que** cette soupape anti-retour (1) est fabriquée dans la région de son deuxième siège de soupape (7) dans un matériau dur et/ou une matière thermoplastique dure ou duro-élastique.

18. Soupape anti-retour selon une des revendications 1 à 17, **caractérisée en ce que** la peau ou la couche (9) est fabriquée dans un élastomère, de préférence en caoutchouc, en silicone ou dans un élastomère thermoplastique.
